# EUROPÄISCHE PATENTSCHRIFT

(11) **EP 2 517 922 B1**
(45) Veröffentlichungstag und Bekanntmachung des Hinweises auf die Patenterteilung: **08.08.2018**
(21) Anmeldenummer: 12002919.4
(22) Anmeldetag: 25.04.2012
(51) Int. Cl.: B60L 11/18, B60L 3/12, H04L 12/40, B60L 3/00

(54) **Flurförderzeug mit mindestens einer Lithium-Ionen-Batterie**
Industrial truck with at least one lithium-ion battery
Chariot de manutention avec au moins une batterie lithium-ion

(30) Priorität: 29.04.2011 DE 102011100923
(43) Veröffentlichungstag der Anmeldung: 31.10.2012
(73) Patentinhaber: Jungheinrich Aktiengesellschaft, 22047 Hamburg (DE)
(72) Erfinder: Opitz, Michael, 23866 Nahe (DE); Taube, Stephan, 22846 Norderstedt (DE); Vahldiek, Dietrich, 24558 Henstedt-Ulzburg (DE)
(74) Vertreter: Hauck Patentanwaltspartnerschaft mbB

(56) Entgegenhaltungen:
- EP-A2- 2 180 574
- US-A1- 2006 152 189
- US-A1- 2007 080 662

## Beschreibung

Die vorliegende Erfindung betrifft ein batteriegespeistes Flurförderzeug, das mit einer Lithium-Ionen-Batterie ausgerüstet und mindestens teilweise von dieser gespeist wird.

Flurförderzeuge, bei denen eine Steuerung von einzelnen Komponenten über einen CAN-Bus erfolgt, sind bekannt. Über den CAN-Bus werden Daten- und Steuersignalen von der Steuerung des Fahrzeugs empfangen und abgesetzt, was einen einfachen und zuverlässigen Datenaustausch in dem Flurförderzeug erlaubt.

Aus US 2006/0152189 A1 ist ein verteiltes Ladesystem für elektrisch und hybridelektrische Fahrzeuge bekannt, das mehrere Batteriepacks mit unterschiedlichen Spannungen einschließlich Hochspannungsbatteriepacks und eine oder mehrere Niederspannungsbatteriepacks aufweist, von denen jedes ein separates und unabhängiges Ladesystem besitzt. Das Dokument US2007/0080662 ist als nächstliegender Stand der Technik angesehen und offenbart die Präambel vom unabhängigen Anspruch 1. Aus US 2007/0080662 ist ein Batteriepack mit einem Mastersteuermodul bekannt, das Lithium-Ionen-Zellen aufweist und über einen CAN-Bus mit einer externen Steuerung kommuniziert. Für die Batterie ist ein Ruhezustand vorgesehen, der durch ein Starten des Fahrzeugs beendet wird.

Der Erfindung liegt die Aufgabe zugrunde, ein Flurförderzeug bereitzustellen, das eine Lithium-Ionen-Batterie mit möglichst einfachen Mitteln möglichst schonend einbindet.

Erfindungsgemäß wird die Aufgabe durch ein Flurförderzeug mit mindestens einer Lithium-Ionen-Batterie gelöst. Das Flurförderzeug ist mit einer Steuerung und einem CAN-Bus ausgestattet, über den Daten- und Steuersignale von der Steuerung empfangen und abgesetzt werden. Der CAN-Bus dient zum Datenaustausch der Steuerung des Flurförderzeugs mit einzelnen Komponenten von diesem.

Erfindungsgemäß weist die Lithium-Ionen-Batterie eine Batteriesteuerung auf, die einen Betriebszustand der Batterie überwacht und Daten zu dem Batteriezustand der Batterie über den CAN-Bus an die Steuerung des Flurförderzeugs sendet. Lithium-Ionen-Batterien, bestehend aus einer Vielzahl von einzelnen Lithium-Ionen-Zellen, können verschiedene Betriebszustände annehmen. Die erfindungsgemäße Batteriesteuerung überwacht mindestens einen Betriebszustand der Batterie und teilt diesen über den CAN-Bus der Steuerung des Flurförderzeugs mit. In der Steuerung des Flurförderzeugs können aus den übermittelten Daten zu der Batterie Kenngrößen für den Betrieb des Flurförderzeugs und/oder über den Zustand der Batterie abgeleitet werden. Auch ist es möglich, die Ladung der Batterie und die zu erwartende Betriebszeit für das Flurförderzeug zu überwachen. Indem bei dem erfindungsgemäßen Flurförderzeug die Lithium-Ionen-Batterie mit seiner Batteriesteuerung über einen CAN-Bus mit der Steuerung des Flurförderzeugs kommuniziert, erfolgt die Einbindung der Lithium-Ionen-Batterie in besonders einfacher Form.

Da eine Batteriesteuerung für eine Lithium-Ionen-Batterie Strom der Batterie verbraucht, ist für das Flurförderzeug ein als Sleep Modus bezeichneter Ruhezustand definiert, in dem die Leistungsaufnahme aus der Lithium-Ionen-Batterie reduziert ist. Erfindungsgemäß ist an dem Flurförderzeug eine CAN-Code-Einheit vorgesehen, die mit der Batteriesteuerung verbunden ist. Diese wird nach einer vorbestimmten Zeitdauer, in der keine Ladung oder Entladung der Batterie erfolgt ist, in einen ersten Ruhezustand als Sleep-Modus versetzt. In dem ersten Ruhezustand ist die Batteriesteuerung bis auf eine Verbindung zur CAN-Bus-Code-Einheit deaktiviert. Durch eine Betätigung der CAN-Bus-Code-Einheit kann die Batteriesteuerung dann wieder vollständig aktiviert werden. Die CAN-Bus-Code-Einheit kann beispielsweise eine numerische Tastatur besitzen, die die Eingabe eines Freischaltcodes erlaubt und so die Batteriesteuerung aus ihrem ersten Ruhezustand wieder für einen Einsatz aktiviert.

Erfindungsgemäß schaltet die Batteriesteuerung nach einer vorbestimmten Zeitdauer von dem ersten Ruhezustand in einen zweiten Ruhezustand, aus dem die Batteriesteuerung durch Anschluss eines Ladegeräts wieder aktivierbar ist. Während in dem ersten Ruhezustand weiterhin Leistung von der Lithium-Ionen-Batterie entnommen wird, um dauerhaft eine Kommunikation zu der CAN-Bus-Code-Einheit aufrechtzuerhalten, wird in dem zweiten Ruhezustand auch hierauf verzichtet und lediglich ein Aufwecken über ein Reaktivieren der Batteriesteuerung durch ein Ladegerät zugelassen.

In einer bevorzugten Weiterbildung des erfindungsgemäßen Flurförderzeugs überwacht die Batteriesteuerung mindestens einen der folgenden Betriebszustände: Spannung, Temperatur und Strom der Batterie. Auf diese Weise kann, insbesondere wenn die Batterie zwischenzeitlich auch durch Rückspeisestrom gespeist wird, zuverlässig geprüft werden, ob die Batterie intakt ist und ob die Betriebszustände der Lithium-Ionen-Batterie einen weiteren Einsatz zulassen.

In einer bevorzugten Ausgestaltung weist die Batteriesteuerung zusätzlich eine Balanciereinheit auf, die bei einem Laden und einem Entladen der Batterie eine gleiche Spannung für einzelne Zellen der mindestens einen Lithium-Ionen-Batterie erzeugt. Eine Lithium-Ionen-Batterie mit ihren einzelnen Zellen ist oftmals sehr empfindlich gegenüber Spannungsschwankungen in den einzelnen Zellen. Die Balanciereinheit ist daher bei Lithium-Ionen-Batterien vorgesehen, um eine gleiche Spannung der einzelnen Zellen in der Lithium-Ionen-Batterie sicherzustellen.

In einer bevorzugten Ausgestaltung ist die Batteriesteuerung dahingehend ausgebildet, um mit einer CAN-Bus-Einheit über den CAN-Bus Daten zu der Batterie und/oder zu dem Ladegerät auszutauschen. Der Datenaustausch über einen CAN-Bus mit einem externen Ladegerät erleichtert es, bei einem Ladevorgang die erforderlichen Daten mit der Batteriesteuerung auszutauschen und so den Ladevorgang angepasst an die Lithium-Ionen-Batterie durchzuführen.

Im Hinblick auf die Verwendung von Ladegeräten ist es grundsätzlich möglich, ein externes Ladegerät mit der Lithium-Ionen-Batterie zu verbinden. Aufgrund der Kompaktheit der Lithium-Ionen-Batterien kann auch ein Einbauladegerät vorgesehen sein, das über den CAN-Bus mit der Steuerung des Flurförderzeugs und der Batteriesteuerung verbunden ist. Die Verwendung eines Einbauladegeräts, das ebenfalls über einen CAN-Bus mit der Batteriesteuerung und der Steuerung des Flurförderzeugs verbunden ist, schafft den Vorteil, dass ein vollumfänglicher Datenaustausch zum Zustand der Batterie und zur Nutzung des Flurförderzeugs mit dem Ladegerät über den CAN-Bus erfolgen kann.

In einer bevorzugten Ausgestaltung weist die Batterie ein Batterieschütz auf, das durch die Batteriesteuerung schaltbar ist. Bevorzugt schaltet die CAN-Bus-Code-Einheit über die Batteriesteuerung das Batterieschütz, um das Flurförderzeug elektrisch leitend mit der Batterie zu verbinden.

Eine bevorzugte Ausgestaltung der Erfindung wird nachfolgend näher beschrieben. Es zeigt:
- Fig. 1: eine schematische Ansicht zum Zusammenwirken der Lithium-Ionen-Batterie, eines Einbauladegeräts und der Fahrzeugsteuerung, bei dem erfindungsgemäßen Flurförderzeug und
- Fig. 2: einen Prinzipschaltplan für die Verwendung einer Lithium-Ionen-Batterie in einem Flurförderzeug.

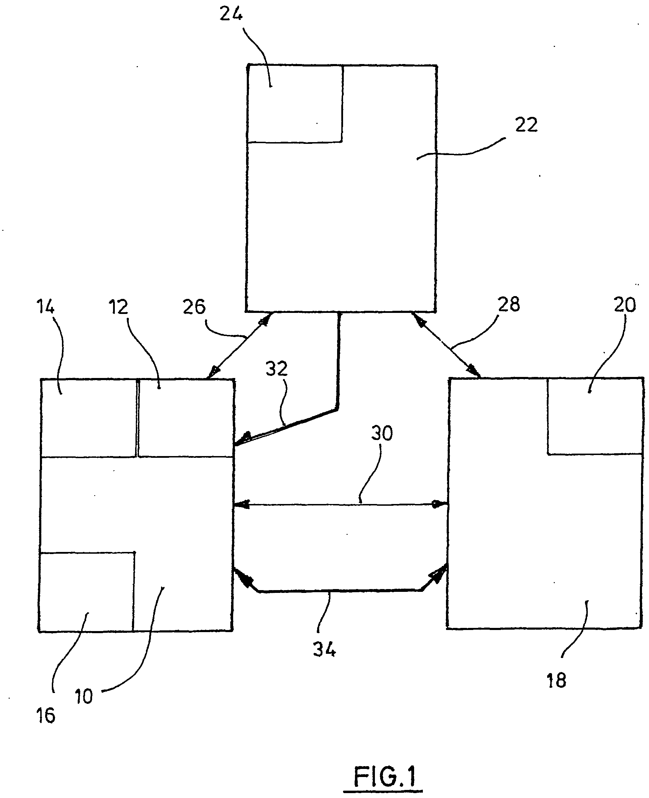

Fig. 1 zeigt in einer schematischen Ansicht eine Lithium-Ionen-Batterie 10. Die Lithium-Ionen-Batterie 10 besitzt einzelne Lithium-Ionen-Zellen 12, die miteinander zusammengeschaltet sind. Ferner besitzt die Lithium-Ionen-Batterie 10 ein Fehlerlogbuch 14, in dem aufgetretene Fehler der Lithium-Ionen-Batterie gespeichert werden. Die Lithium-Ionen-Batterie 10 besitzt ferner eine Überwachung der Zellen, wobei die Zellen im Hinblick auf ihre Spannung, ihre Temperatur und den an den Zellen geflossenen Strom überwacht werden. Darüber hinaus ist in die Überwachung 16 eine Balanciereinheit integriert, die die Spannung der einzelnen Zellen 12 untereinander ausgleicht.

In Fig. 1 ist ferner schematisch eine Steuerung des Flurförderzeugs 18 dargestellt, über die die einzelnen Antriebsaggregate des Flurförderzeugs angesteuert und mit Leistung versorgt werden. Die Fahrzeugsteuerung 18 ist ebenfalls mit einem Fehlerlogbuch 20 ausgestattet, in dem an der Fahrzeugsteuerung auftretende Fehler verzeichnet werden.

Ebenfalls in Fig. 1 schematisch dargestellt ist ein Einbauladegerät 22, das ebenfalls mit einem Fehlerlogbuch 24 ausgestattet ist. Die Lithium-Ionen-Batterie 10 kann mit dem Einbauladegerät 22 über einen seriellen CAN-Bus Daten über eine Datenverbindung 26 austauschen. Das Einbauladegerät 22 kann zusätzlich über eine serielle CAN-Bus-Verbindung 28 Daten- und Steuersignale mit der Fahrzeugsteuerung 18 austauschen. Ferner ist eine serielle CAN-Datenbus-Verbindung 30 zwischen der Lithium-Ionen-Batterie 10 und der Fahrzeugsteuerung 18 vorgesehen.

Neben dem Austausch von Daten über die Datenverbindungen 26, 28 und 30 kann die Lithium-Ionen-Batterie 10 über die Leistungsversorgung 32 mithilfe des Einbauladegeräts 22 geladen werden. Das Einbauladegerät bezieht seine elektrische Leistung aus einem Stromnetz. Die Verbindung zwischen Einbauladegerät und Stromnetz ist in Fig. 1 nicht dargestellt.

Ein bidirektionaler Leistungsaustausch erfolgt zwischen der Lithium-Ionen-Batterie 10 und der Fahrzeugsteuerung 18 über die elektrische Verbindung 34. Da die von der Fahrzeugsteuerung 18 gesteuerten Komponenten des Flurförderzeugs in der Regel auch generatorisch betrieben werden können, so beispielsweise beim Nutzbremsen und beim Nutzsenken, ist die Leistungsverbindung 34 bidirektional ausgestaltet, um elektrische Leistung sowohl aus der Lithium-Ionen-Batterie 10 entnehmen als auch in diese zurückspeisen zu können.

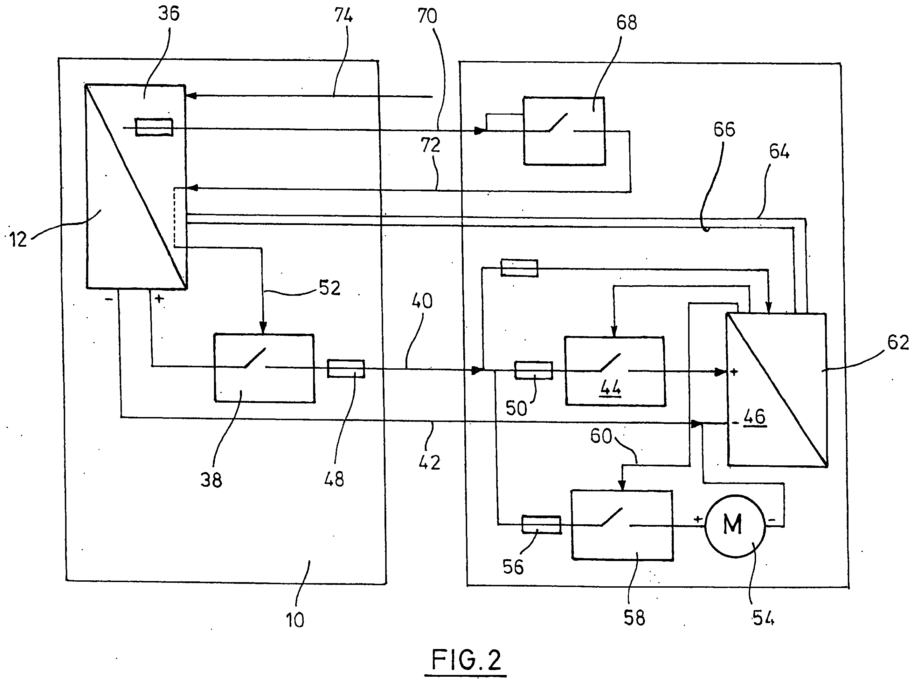

Fig. 2 zeigt ein Prinzipschaltbild mit einer Lithium-Ionen-Batterie 10, die aus den Lithium-Ionen-Zellen 12 und einer zugehörigen Batteriesteuerung 36 besteht. Die Lithium-Ionen-Zellen 12 geben über ein Batterieschütz 38 elektrische Leistung ab. Über die beiden Anschlussleitungen 40 und 42 liegt die abgegebene Leistung an einem Fahrzeughauptschütz 44 an, das einem Leistungsteil 46 vorgeschaltet ist. Das Batterieschütz 38 ist zusätzlich über eine Batteriesicherung 48 abgesichert, ebenso ist das Hauptschütz 44 über eine Sicherung 50 abgesichert.

Das Batterieschütz 38 wird über eine Steuerleitung 52 von der Batteriesteuerung 36 geschaltet. Das Leistungsteil 46 in dem Flurförderzeug ist mit den Anschlussleitungen 40, 42 verbunden und speist über diese beispielsweise einen Hydraulikmotor 54, der über eine zugehörige Hydrauliksicherung 56 und ein Hydraulikschütz 58 abgesichert bzw. schaltbar ist. Das Hydraulikschütz 58 wird über die Datenleitung 60 von der Steuerung 62 geschaltet.

Über die Leitungen 64 und 66 ist die Batteriesteuerung 36 mit der Steuerung 62 des Flurförderzeugs verbunden. Über die Leitungen 64 und 66 werden die digitalen Signale des CAN-Bus-Systems unter Verwendung der einschlägigen Protokolle für den CAN-Bus übertragen. Die Datenleitungen 64 und 66 sind mit zwei separaten Anschlüssen an der Batteriesteuerung verbunden.

Ebenfalls in Fig. 2 dargestellt ist eine CAN-Code-Einheit 68, die beispielsweise aus einer numerischen Tastatur (nicht dargestellt) besteht. Über die CAN-Code-Einheit kann ein Freischalt-Code für das Flurförderzeug eingegeben werden. Der eingegebene Freischalt-Code wird über die Leitungen 68 und 70 an die Batteriesteuerung 36 angelegt und von dieser ausgewertet. Ist der eingegebene Freischalt-Code korrekt, so schaltet die Batteriesteuerung 36 beispielsweise das Batterieschütz 38.

An der Batteriesteuerung 36 liegt ferner eine Datenleitung 74 an, über die eine Ladegeräterkennung erfolgt. Die Ladegeräterkennung 74 stellt sicher, dass für das Ladegerät, sei es nun ein Einbauladegerät, wie in Fig. 1 dargestellt, oder ein externes Ladegerät, eine korrekte Zuordnung zwischen Batterie und Ladegerät erfolgt.

Auch Fig. 2 macht deutlich, dass die Batterie über die Leitungen 64 und 66 mit der Steuerung des Flurförderzeugs kommuniziert. Durch den zum Einsparen von Energie vorgesehenen Ruhezustand ist es möglich, bei einer längeren Nichtverwendung des Flurförderzeugs Energie einzusparen. Um die Steuerung der Batterie aus dem ersten Ruhezustand wieder zu aktivieren, muss das Flurförderzeug unter Verwendung der CAN-Code-Einheit wieder aktiviert werden. Um die Batteriesteuerung aus dem ersten Ruhezustand wieder zu aktivieren, wird nach einem durchgeführten Selbsttest der Batterie das Batterieschütz und damit das restliche Flurförderzeug eingeschaltet. Es ist auch möglich, die Spannungsversorgung der CAN-Code-Einheit abzuschalten. Dies erfolgt im zweiten Ruhezustand, wenn das Flurförderzeug für längere Zeit nicht genutzt wird. In diesem Fall wird auch der Prozessor der Batteriesteuerung abgeschaltet, wobei dieser nur aktiviert werden kann, wenn eine Spannung an dem Anschluss für die Ladegeräterkennung anliegt.

## Patentansprüche

1. Flurförderzeug mit mindestens einer Lithium-Ionen-Batterie (10), einer Fahrzeugsteuerung (18) und einem CAN-Bus (28), über den Daten- und Steuersignale von der Fahrzeugsteuerung (18) empfangen und über diese abgesetzt werden, wobei die Lithium-Ionen-Batterie (10) eine Batteriesteuerung (16) aufweist, die einen Betriebszustand der Lithium-Ionen-Batterie (10) überwacht und Daten zu dem überwachten Betriebszustand der Lithium-Ionen-Batterie (10) über den CAN-Bus (28) an die Fahrzeugsteuerung (18) des Flurförderzeugs sendet,und das Flurförderzeug eine CAN-Code-Einheit (68) aufweist, die mit der Batteriesteuerung (16) verbunden ist, aus einer numerischen Tastatur besteht und über die ein Freischaltcode für das Flurförderfahrzeug eingegeben werden kann, wobei die Lithium-Ionen-Batterie (10) nach einer vorbestimmten Zeitdauer in einen ersten Ruhezustand als Sleep Modus versetzt wird, in dem die Batteriesteuerung (16) bis auf die Verbindung zur CAN-Bus-Code-Einheit (68) deaktiviert ist und durch eine Betätigung der CAN-Bus-Code-Einheit (68) die Fahrzeugsteuerung (16) dann wieder vollständig aktiviert wird,
**dadurch gekennzeichnet, dass**
die Batteriesteuerung (16) nach einer vorbestimmten Zeitdauer in dem ersten Ruhezustand in einen zweiten Ruhezustand wechselt, aus dem die Batteriesteuerung (16) durch Anschluss eines Einbauladegeräts (22) oder eines externen Ladegeräts, das über den CAN-Bus (28) mit der Batteriesteuerung (16) und der Fahrzeugsteuerung (18) verbunden ist und seine elektrische Leistung aus einem Stromnetz bezieht, wieder aktivierbar ist, wobei während in dem ersten Ruhezustand weiterhin Leistung von der Lithium-Ionen-Batterie (10) entnommen wird, um dauerhaft eine Kommunikation zu der CAN-Bus-Code-Einheit (68) aufrechtzuerhalten, wird im zweiten Ruhezustand auch hierauf verzichtet und lediglich ein Aufwecken über ein Reaktivieren der Batteriesteuerung (16) durch das Einbauladegerät (22) oder das externe Ladegerät zugelassen.

2. Flurförderzeug nach Anspruch 1, **dadurch gekennzeichnet, dass** die Batteriesteuerung mindestens einen der folgenden Betriebszustände überwacht: Spannung, Temperatur und Strom der Lithium-Ionen-Batterie (10).

3. Flurförderzeug nach Anspruch 1 oder 2, **dadurch gekennzeichnet, dass** die Batteriesteuerung (16) zusätzlich eine Balanciereinheit aufweist, die bei einem Laden und Entladen der Lithium-Ionen-Batterie (10) eine gleiche Spannung für die einzelnen Zellen der mindestens einen Lithium-Ionen-Batterie (10) untereinander ausgleicht.

4. Flurförderzeug nach einem der Ansprüche 1 bis 3, **dadurch gekennzeichnet, dass** für einen Anschluss eines externen Ladegeräts mit einer CAN-Bus-Einheit (28) über den CAN-Bus Daten zu der Lithium-Ionen-Batterie (10) und/oder dem Ladevorgang mit der Batteriesteuerung (16) ausgetauscht werden.

5. Flurförderzeug nach einem der Ansprüche 1 bis 4, **dadurch gekennzeichnet, dass** das Einbauladegerät (22) über eine serielle CAN-Bus-Verbindung (28) mit der Fahrzeugsteuerung (18) und über eine weitere serielle CAN-Bus-Verbindung (26) mit der Batteriesteuerung (16) verbunden ist.

6. Flurförderzeug nach einem der Ansprüche 1 bis 5, **dadurch gekennzeichnet, dass** die Lithium-Ionen-Batterie (10) ein Batterieschütz (38) aufweist, das durch die Batteriesteuerung (16) schaltbar ist.

7. Flurförderzeug nach Anspruch 6, **dadurch gekennzeichnet, dass** die CAN-Bus-Code-Einheit (68) über die Batteriesteuerung (16) das Batterieschütz (38) schaltet, um das Flurförderzeug mit der Lithium-Ionen-Batterie (10) zu verbinden.

## Claims

1. An industrial truck with at least one lithium-ion battery (10), a vehicle control device (18) and a CAN bus (28), via which data- and control signals from the vehicle control device (18) are received and transmitted, wherein the lithium-ion battery (10) comprises a battery control (16) which monitors an operation status of the lithium-ion battery (10) and sends data concerning the monitored operation status of the lithium-ion battery (10) to the vehicle control device (18) of the industrial truck via the CAN bus (28), and the industrial truck comprises a CAN bus code unit (68) which is connected to the battery control (16), consists of a numerical keyboard via which an unlock code for the industrial truck can be put in, wherein the lithium-ion battery (10) is shifted into a first idle state as sleep mode, in which the battery control (16) is deactivated except the connection to the CAN bus code unit (68), and the vehicle control device (18) is completely activated again by an actuation of the CAN bus code unit (68), **characterised in that**
after a predetermined period of time in the first idle state, the battery control (16) changes over into a second idle mode, starting from which the battery control (16) can be activated again by connecting a build-in charger (22) or an external charger which is connected to the battery control (16) and the vehicle control device (18) via the CAN bus (28) and receives its electric power from a current grid, wherein during the first idle condition power is still being extracted from the lithium-ion battery (10) in order to maintain a communication with the CAN bus code unit (68) continuously, in the second idle state it is done even without this, and only waking up is permitted via a reactivation of the battery control (16) by the build-in charger (22) or the external charger.

2. The industrial truck according to claim 1, **characterised in that** the battery control monitors at least one of the following operation statuses: voltage, temperature and current of the lithium-ion battery (10).

3. An industrial truck according to claim 1 or 2, **characterised in that** the battery control (16) has in addition a balancing unit, which balances an equal voltage for all the individual cells of the at least one lithium-ion battery (10) when the lithium-ion battery (10) is being charged or uncharged.

4. An industrial truck according to any one of the claims 1 to 3, **characterised in that** data concerning the lithium-ion battery (10) and/or the charging operation are exchanged with the battery control (16) via the CAN bus in order to connect an external charger to a CAN bus unit (28).

5. An industrial truck according to any one of the claims 1 to 4, **characterised in that** the build in charger (22) is connected to the vehicle control device (18) via one serial CAN bus connection (28), and via an additional serial CAN bus connection (26) to the battery control (16).

6. An industrial truck according to any one of the claims 1 to 5, **characterised in that** the lithium-ion battery (10) comprises a battery contactor (38), which can be switched via the battery control (16).

7. The industrial truck according to claim 1, **characterised in that** the CAN bus code unit (68) switches the battery contactor (38) via the battery control (16) in order to connect the industrial truck to the lithium-ion battery (10).

## Revendications

1. Chariot de manutention avec au moins une batterie lithium-ion (10), un dispositif de commande du véhicule (18) et un bus CAN (28), à travers duquel des signaux de données et de contrôle du dispositif de commande du véhicule (18) sont reçus et transmis, la batterie lithium-ion (10) comportant une commande de batterie (16) qui surveille un état de fonctionnement de la batterie lithium-ion (10) et transmet des données concernant l'état de fonctionnement surveillé de la batterie lithium-ion (10) au dispositif de commande du véhicule (18) du chariot de manutention via le bus CAN (28), et le chariot de manutention comporte une unité CAN bus code (68) qui est reliée à la commande de batterie (16), consiste d'un clavier numérique à travers duquel un clé de licence pour le chariot de manutention peut être donné, la batterie lithium-ion (10) étant mise en un premier état de repos comme état de sommeil, dans lequel la commande de batterie (16) est désactivée sauf la connexion à l'unité CAN bus code (68), et le dispositif de commande du véhicule (18) est entièrement activé de nouveau par une actuation de l'unité CAN bus code (68), **caractérisé en ce que** après un période de temps prédéterminé dans le premier état de repos, la commande de batterie (16) change à un a deuxième état de repos, à partir duquel la commande de batterie (16) peut être activée de nouveau en reliant un chargeur encastré (22) ou un chargeur externe qui est relié à la commande de batterie (16) et le dispositif de commande du véhicule (18) via le bus CAN (28) et reçoit son énergie électrique d'un réseau de courant, dans le premier état de repos de l'énergie électrique étant encore prise de la batterie lithium-ion (10) afin de continûment maintenir une communication avec 1 unité CAN bus code (68), dans le deuxième état de repos même cela n'est pas fait, et seulement réveiller est permis via une réactivation de la commande de batterie (16) par le chargeur encastré (22) ou le chargeur externe.

2. Chariot de manutention selon la revendication 1, **caractérisé en ce que** la commande de batterie surveille au moins un des états de fonctionnement: tension, température et courant de la batterie lithium-ion (10).

3. Chariot de manutention selon la revendication 1 ou 2, **caractérisé en ce que** la commande de batterie (16) comporte en outre une unité d'équilibrage, qui équilibre une tension égale pour toutes les cellules individuelles de l'au moins une batterie lithium-ion (10) quand la batterie lithium-ion (10) est chargée ou déchargée.

4. Chariot de manutention selon l'une quelconque des revendications 1 to 3, **caractérisé en ce que** des données concernant la batterie lithium-ion (10) et/ou le procès de chargement sont échangées avec la commande de batterie (16) via le bus CAN afin de relier un chargeur externe à une unité bus CAN (28).

5. Chariot de manutention selon l'une quelconque des revendications 1 to 4, **caractérisé en ce que** le chargeur encastré (22) est relié au dispositif de commande du véhicule (18) via une connexion bus CAN sérielle (28), et via une autre connexion bus CAN sérielle (26) à la commande de batterie (16).

6. Chariot de manutention selon l'une quelconque des revendications 1 to 5, **caractérisé en ce que** la batterie lithium-ion (10) comporte un contacteur de batterie (38), qui peut être commuté via la commande de batterie (16).

7. Chariot de manutention selon la revendication 1, **caractérisé en ce que** l'unité CAN bus code (68) commute le contacteur de batterie (38) via la commande de batterie (16) afin de relier le chariot de manutention à la batterie lithium-ion (10).
